# EUROPEAN PATENT SPECIFICATION

(11) **EP 3 028 833 B1**
(45) Date of publication and mention of the grant of the patent: **04.12.2019**
(21) Application number: 14382494.4
(22) Date of filing: 04.12.2014
(51) Int. Cl.: B29C 45/16, B25G 1/10, B29C 45/44, B29C 45/33

(54) **Handle manufacturing method, system and mold for manufacturing same**
Verfahren zur Herstellung eines Griffs, System und Form zu seiner Herstellung
Procédé de fabrication d'une poignée, système de fabrication et moule

(43) Date of publication of application: 08.06.2016
(73) Proprietor: SNA Europe Industries Iberia, S.A., 01196 Arangiz (Alava) (ES)
(72) Inventor: Arrizabalaga Iraegi, Xabier, 01196 ARANGIZ (Álava) (ES); Aranberri Aresti, Egoitz, 01196 ARANGIZ (Álava) (ES); Saez De Castillo Apodaca, Asier, 01196 ARANGIZ (Álava) (ES); Uranga Elorza, Jon, 01196 ARANGIZ (Álava) (ES)
(74) Representative: Carpintero Lopez, Francisco

(56) References cited:
- EP-A1- 0 908 288
- EP-A1- 1 273 422
- DE-U1-202011 110 041
- US-A- 6 094 781
- US-A1- 2012 088 005
- US-B1- 6 199 460
- US-B1- 6 368 536

## Description

### Object of the Invention

The present invention relates to a method, system and apparatus for manufacturing a handle, said handle being formed by several materials. The invention can be applied for example to handles for hand tools, such as screwdrivers, nut drivers, hammers or any other type of tool.

### Background of the Invention

The simplest handles made today are formed by a single material (usually plastic). For more advanced uses, simultaneously requiring robustness and hold, handles are manufactured formed by two materials: a harder and more resistant material is used inside the handle to provide the handle with greater robustness, and a more flexible material is used on the outside to provide a firmer and more secure grip that is more comfortable to use. However, up until now the manufacture of these handles made of two materials were complicated, time consuming and expensive.

Another problem in manufacturing handles involves the brands or signage used on same. Most handles that are manufactured include a signage on the surface with letters, numbers and/or drawings that provides different information about the product. For example, in the case of handles for tools, said information can be about the type of tool, its size, number, type of head (in the case of screwdrivers), manufacturer, model, etc.

These brands/signs are usually applied by printing or painting. Handles, however, especially handles for hand tools, are generally subjected to severe wear due to friction with the user's hand or due to impacts, which causes the brand/signs to gradually fade, making it illegible once it is used for a short time.

In some handles this brand is made by means of an embossment or recess in the handle, but that means that the handle is not smooth enough and it makes it difficult to turn the handle, making use thereof uncomfortable and quite impractical.

Furthermore, including the brand on the handle involves another step in producing it, therefore prolonging (and raising the price of) the manufacturing process.

Prior art document DE202011110041 U1 discloses a base body for a handle of a tool, in particular a screwdriver, characterized in that, on the outer side of the base body, is disposed at least an insertion element to be covered by injection or to be moulded in a posterior injection.

Prior art document EP0908288 A1 discloses a multi-coloured paintbrush handle having an axis, a first and a second extremity crossed by the axis, and an external grip surface placed between said extremities, the handle including: a core parallel to the axis, at least one coloured raised part emerging from the core and externally defining at least one shaped section of the grip surface, and at least a first layer of coloured plastic material moulded onto the core, the first layer externally defining a main section of the grip surface and having a different color than that of the raised part.

Prior art document US6094781 A discloses a handle for tools such as screwdrivers where an end region is shaped as a smooth rounded surface and made by injection moulding in multiple steps from at least two differently coloured plastic materials, which are tactilely indistinct, to form a visible marking for identification of the tool.

Prior art document US2012/088005 A1 discloses a self-adjusting angled ejector including an angled ejector base, a fixing member, an angled ejector pin and two adjusting plates. The angled ejector pin disposes an undercut-forming portion projecting on an upper end thereof. A lower end of the angled ejector pin is received in a groove of the angled ejector base and is detachably fixed on it. The two adjusting plates form a rotating region therebetween for pivotally positioning the angled ejector base. When ejecting the product, the angled ejector base can rotate to adjust the angle of the angled ejector pin for preventing the angled ejector pin from being bent or broken.

Prior art document US6368536 B1 discloses a driving tool, such as a screwdriver, which has a handle with an injection-moulded, relatively hard and rigid inner body, moulded around a tool shank, the inner body having an elongated central portion with two end flanges extending laterally outwardly of the central portion around the entire periphery thereof, with the central portion having a peripheral groove formed therein adjacent to an end flange. An outer gripping body of a relatively soft and resilient material is injection moulded around the inner body, by supporting the inner body by its ends in a mould cavity and injecting the mould charge adjacent to the groove so that it first fills the groove and then flows in a circumferential front longitudinally to the other end flange, surrounding said central portion of said inner body.

Prior art document EP1273422 A1 discloses a handle for a hand-held or operated object or appliance comprises a main body of a rigid material and a separate moulding insert which can be fitted on the main body and having a raised pattern or shape including at least one element thereon of closed form, the insert defining therein or defining with the main body a bore or bores which communicate with the interior of the element of closed form, through which a soft plastics material such as an elastomer being overmoulded on the handle can flow.

Prior art document US6199460 B1 discloses a tool handle which includes one or more peripheral projections extended outward from the outer peripheral portion and each having a cavity for receiving a filled material. A cover sleeve is engaged on the outer peripheral portion of the handle. The filled material and the cover sleeve are preferably selected from the soft materials, such as rubber, and may be different from each other. The handle includes one or more passages communicating with the cavities for receiving the filled material and for solidly retaining the material in place.

It is therefore desirable, a process for inserting these brands in the handles, which prolongs their durability, not making it difficult for the user to use the handle and not prolonging and complicating the manufacturing process. Generally speaking, in view of the state of the art it would be necessary a manufacturing process for manufacturing handles that is simpler, quicker and more economical than those existing today which maintains or even increases handle quality and robustness and makes the handles easy to use.

### Summary of the Invention

The present invention describes an improved method for manufacturing handles that prevents the drawbacks of earlier processes while at the same time provides structural and operational advantages as well as additional features.

The present invention allows manufacturing a handle formed by two different materials, a body made, for example, of a first more rigid material (for example, a polymer such as polypropylene), and a covering made, for example, of a second more flexible material (for example, an elastic polymer such as rubber). The body can include brands or signs (formed by letters, numbers, logos, drawings or any other type of graphical element or symbol) made in said first material which can be ornamental or provide the user with information about the tool to which the handle belongs. The covering made of the second material may have two separate, independent portions that do not touch one another on the surface (a strip of the first material will be arranged between them). The proposed manufacturing process will also allow the covering made of the second material to fill up the inner cavities and cover the two separate portions with a single injection point.

Therefore, the proposed manufacturing process will not only allow the signs of the handle to experience less wear and greater durability, but rather it will allow such signs to be included in the handle without requiring another step in the production chain (with the subsequent savings in time and resources). Furthermore, as two different areas in the covering can be created (and the cavities of the different symbols, letters, numbers, etc. forming the signs can be filled in) with a single injection point, the cost of the mold and the time and resources necessary for making this covering are reduced (with respect to other solutions of the state of the art which always involve using several injection points).

Specifically, a first aspect relates to a method for manufacturing a handle formed by at least a first material and a second material, characterized in that the method comprises the following steps:
a) injection molding an inner body or first body by injecting the first material using a first mold, where said inner body comprises:
   a rim (lip) surrounding said inner body, separating a first area A from a second area B;
   at least one hollow channel communicating the first area and the second area, said hollow channel extending under the surface of the inner body below the rim;
   a set of embossed elements (letters, numbers, drawings or any other type of symbol or graphical element) located on the surface of the inner body, where for each closed area (i.e., completely surrounded by the embossment of the element to which it belongs) of an element belonging to this set of elements, the inner body comprises a hollow channel extending under the surface of the inner body below the embossment of the element and communicating the portion of the inner body outside the element and the closed area of the element (i.e., the hollow channel has an opening inside the closed area of the symbol and in the outer portion of said symbol);
b) injection molding an outer body or second body by injecting the second material over the inner body through a single injection point using a second mold, such that this outer body made of the second material is flush with the embossments of the embossed elements of the set and where:
   molding is performed by making the second material flow through the hollow channel from area A to area B, such that the outer surface of the outer body has two separate areas that do not touch one another located on both sides of the rim, and by making the second material flow through the hollow channel of each closed area of the set of elements, such that the closed areas are filled up with the second material such that said material is flush with the embossment of the element to which the closed area belongs and where the elements of the set of embossed elements are letters, numbers or drawings providing a user of the handle with information about the tool to which the handle belongs.

The inner body can have two embossments at the ends of the handle, and the outer surface of the outer body is flush with these embossments of the ends and can have a through hole with an embossment around said hole; and the outer body made of the second material is flush with said embossment around the hole when the second material is molded, therefore this hole is not filled up with this second material.

The inner body can have a cross section that varies along its length.

In one embodiment, the height of the rim is less than the thickness of the outer body and the second mold has a projection which has the same shape as the rim and is tightly attached to said rim, such that it prevents the passage of the second material from the second area B to the first area A when the second material is injected.

A second aspect relates to a system for manufacturing a handle formed by at least a first material and a second material, characterized in that the system comprises the following steps:
a) a first mold for injection molding an inner body by injecting the first material, where said inner body comprises:
   a rim circumferentially surrounding said inner body, separating a first area and a second area;
   at least one hollow channel communicating the first area and the second area, said hollow channel extending under the surface of the inner body below the rim;
   a set of embossed elements located on the surface of the inner body, where for each closed area of an element belonging to the set of elements, the inner body comprises a hollow channel extending under the surface of the inner body below the embossment of the element and communicating the portion of the inner body outside the element and the closed area of the element;
b) a second mold for injection molding an outer body by injecting the second material over the inner body through a single injection point, such that said material is flush with the embossments of the elements of the inner body, and where the outer surface of the outer body has two areas that do not externally touch one another located on both sides of the rim made of the first material, and the closed areas of the elements are filled up with the second material such that said material is flush with the embossment of the element to which the closed area belongs; where the elements of the set of embossed elements are letters, numbers or drawings providing a user of the handle with information about the tool to which the handle belongs.

A third aspect relates to a mold for manufacturing the inner body of a handle by injecting a first material over said mold, where the mold comprises:
- a first recess for forming in the inner body a rim circumferentially surrounding said inner body, separating a first area and a second area;
- at least a first core for shaping a hollow channel communicating the first area and the second area under the surface of the inner body, below the rim,
- a set of recesses for forming a set of embossed elements on the surface of the inner body,
- for each closed area of an element belonging to the set of elements, a second core for shaping a hollow channel communicating the portion of the inner body outside the element and the closed area of the element, below the embossment of the element; where the elements of the set of embossed elements are letters, numbers or drawings providing a user of the handle with information about the tool to which the handle belongs.

The mold can further comprise for each second core, an ejection part which moves the core when a plate moves vertically upward, taking it out of the part and therefore allowing de molding of the corresponding hollow channel.

Therefore, according to the invention, a method, system and apparatus are provided according to the independent claims. Advantageous embodiments are defined in the dependent claims. The foregoing and other aspects of the invention will become evident and will be deduced from the embodiments described below in this specification.

### Description of the Drawings

To complement the description that is being made and for the purpose of aiding to better understand the features of the invention according to a preferred practical embodiment thereof, a set of drawings is attached as an integral part of said description in which the following is depicted with an illustrative and non-limiting character:
Figure 1 shows a view of a handle manufactured according to an embodiment of the present invention.
Figure 2 shows a view of the layer or body of the handle made of the first material for the case of the exemplary handle shown in Figure 1, manufactured according to an embodiment of the present invention.
Figure 3 shows a view of the layer or body of the handle formed from the second material for the case of the exemplary handle shown in Figure 1, manufactured according to an embodiment of the present invention.
Figure 4 shows a top view of the mold used for depositing the first material for the case of the exemplary handle shown in Figure 1, manufactured according to an embodiment of the present invention.
Figure 5 shows a cross-section view along axis A-A of the mold shown in Figure 4, according to an embodiment of the present invention.
Figure 6 shows a cross-section view along axis D-D of the mold shown in Figure 4, according to an embodiment of the present invention.

### Detailed Description of the Invention

A (preferred) embodiment of the invention is described in detail below in reference to the aforementioned drawings without this limiting or reducing the scope of protection of the present invention.

The present invention relates to a method, system and apparatus (mold) for manufacturing handles. The handles can be of any type. In one embodiment, these handles are handles for tools, particularly hand tools (operated by hand), such as screwdrivers, nut drivers, hammers or any other type of hand tool.

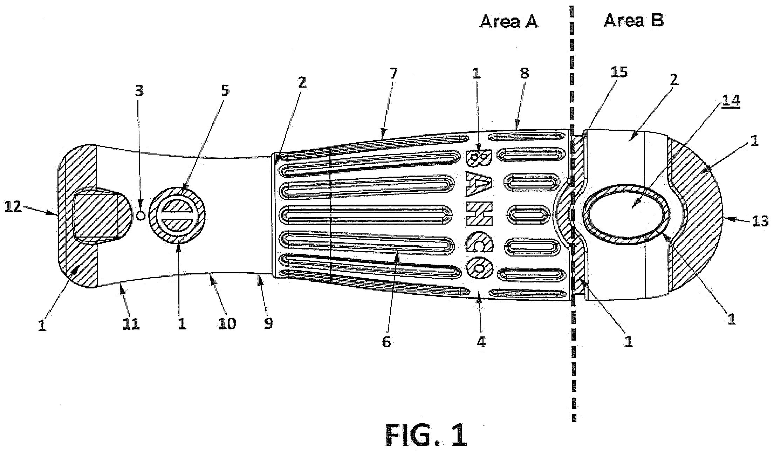

Figure 1 shows a handle manufactured according to an embodiment of the invention. In the specific case in Figure 1, a handle of a screwdriver is shown. As can be seen, the handle is formed by two materials, a first material that is deposited in the innermost portion of the handle (inner layer 1) and another material that is deposited on the first material in the outermost portion (outer or grip layer 2) partially covering the layer of the first material. The first material is stripped (hatching) in order to distinguish what portions each of the materials cover in Figure 1.

As will be indicated below, the first material is deposited by injection using the mold (injection molding) proposed by the present invention, for example, and the second material (which is usually liquid or semi-liquid) is deposited on this first material, through a single injection point (3), by means of another injection process (called injection overmolding because it is injected over another material).

Both the first material and second material can be any type of material. The material can be selected such that the inner body (made of the first material) is hard and rigid and the second material can be selected such that the grip body is relatively soft and flexible, to provide better grip and greater comfort for a user's hand, although other materials with other characteristics can be used depending on the application for which the handle is required. In one embodiment, the first material is a plastic polymer (such as polypropylene, for example) and the second material is rubber (of any desired type, although the type of rubber is usually chosen according to the application of the handle).

In the particular exemplary case at hand (figure 1), the handle has an elongated central portion (7) with a rear section (8), a forwardly inclined section (9), a neck section (10) having a smaller cross section, and a flared section (11). The handle is finished at one of its ends with a substantially planar surface (12) and at the other end with a curved end surface (13). It can also have a through hole (14) so that the handle can be hung. Of course this is merely an exemplary design and many other designs are possible.

Although it is deposited using a single injection point (as explained below), the layer forming the second material may have two different independent areas: area A occupying the central portion of the handle and the front end thereof, and area B at the rear end (in Figure 1 both areas are shown separated by a dotted line). Both portions are separated by an area (15) made of the first material (as explained below, the rubber goes from area A to area B, below said area).

The handle can have one or more signs (formed by elements such as letters, numbers, logos, drawings or any other type of symbol or graphical element) providing the user with different information. In the example of Figure 1, these signs are the manufacturer's brand (4) and the type of head for screwdrivers (5), although of course this is not limiting, as any other type of signs that are more or less in number, offering another type of information, could be inserted. It should be pointed out that the symbols, logos, letters or numbers of the signs are manufactured using the first material on the outer portion thereof, whereas the closed inner cavities of said symbols, letters or numbers are filled up with the second material.

The handle can have a series of grooves (6) made in the second material to improve the grip provided by same.

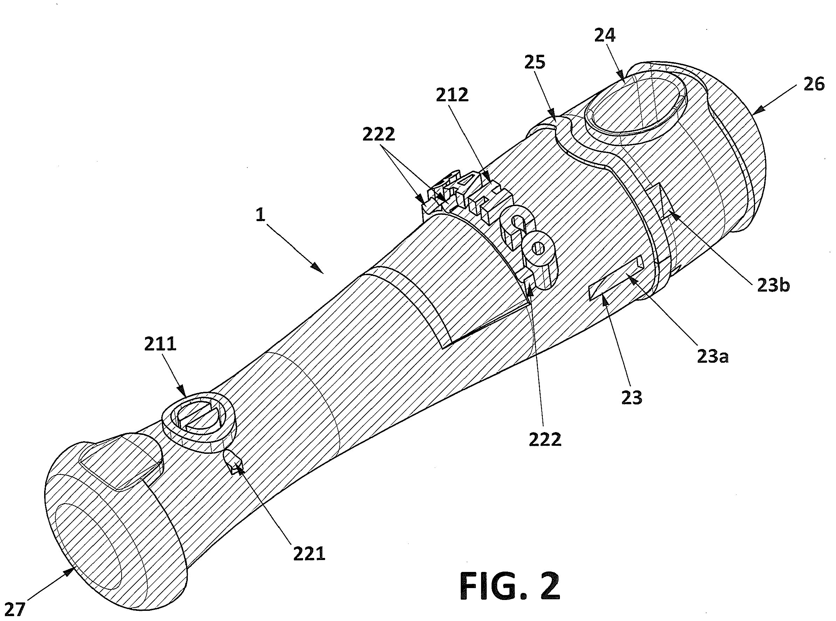

Figure 2 shows the portion of the handle formed by the first material (1) (referred to as inner body or inner layer or layer or body made of the first material), for the case of the exemplary handle shown in Figure 1. The second material (rubber) is deposited on this inner body by injection.

This layer has embossments (211, 212, 24, 25, 26, 27) in those areas that are not to be covered by the second material when it is deposited on this inner layer. For example, as can be seen, this layer also has an embossment (24) around the hole (14) so that the second material does not cover said hole when it is deposited. For example, it has embossments (26-27) at each end preventing the second material from covering said ends. The embossments (211, 212, 24, 26, 27) usually have the same height so that the layer that is deposited is uniform. The deposited layer of second material will be as thick as the height of these embossments, i.e., the covering made of the second material will be adjusted with sufficient thickness so that it is flush (substantially flush) with the edge of these embossments. As will be seen, in one embodiment the rim separating areas A and B can have a height less than the rest, achieving uniform thickness by means of other techniques.

As can be seen, said body made of the first material includes in embossed elements the sign or signs to be included on the handle (in the case of the example, the name of the manufacturer 212 and the type of head of the screwdrivers 211). These signs are formed by a set of embossed elements (letters, numbers, drawings or symbols in general) which can have closed areas (i.e., they are completely surrounded by the embossment of the element). These closed areas are filled up with rubber when the injection process for injecting said rubber is performed (in the case of the example, the "B", the "A", the "O" and the bottom logo are the elements having these closed areas); the thickness of the layer of rubber will be adjusted with sufficient thickness so that it is flush with the edge of the elements forming these signs (i.e., with the edge of symbols 211-212), so the height of these embossments determines the thickness of the layer of rubber, such that the embossments do not project over the layer of rubber and vice versa. To fill up these closed areas, the inner body has hollow channels (221-222) extending below the outer portion of each of the elements of the sign that are open in the inner portion of each of those elements. These inner hollow channels allow the second material (rubber) to flow through them, such that when the second material is injected, said material enters through the channels (221-222), goes below the outer portion of the elements and fills up the inner portion, which allows depositing material in the inner portion of the elements with a single injection. In one embodiment, each closed area of one of these elements of the sign will have a hollow channel to be filled up. In one embodiment, one and the same hollow channel can be used to fill up several areas.

The inner body has a rim (25) separating the layer of the second material of the handle into areas A and B. To fill up these 2 areas with a single injection, the inner body has one or more inner hollow channels (23) starting in area A (23a) and ending in area B (23b) extending below the rim (25), such that when the second material is injected, said material enters through the opening of area A (23a) and comes out through the opening of area B (23b), filling up said area B, up to the final embossment (26). In other words, the second material goes below the rim 25, which allows depositing the second material in the two areas with a single injection. To allow for a quicker and more uniform covering, there is usually more than one channel of this type, preferably uniformly distributed throughout the inner body.

In other words, the inner cavities of the signs and of area B are filled up by means of inner channels in the inner layer allowing the second material (liquid or semi-liquid) to flow therethrough.

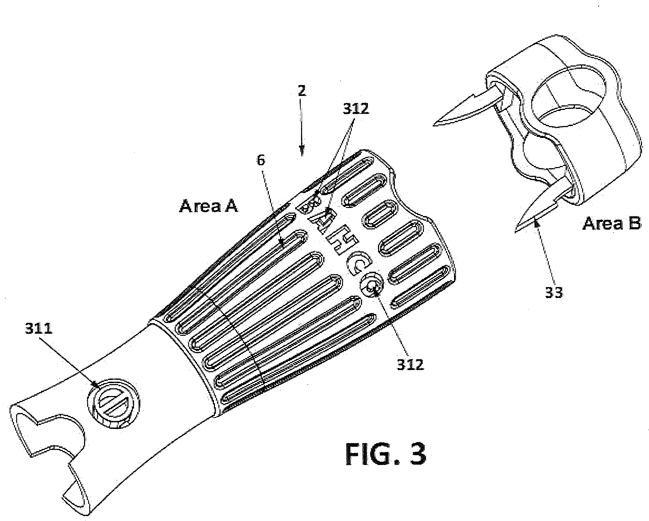

Figure 3 shows the portion of the handle formed by the second material (2) (referred to as body or outer layer or layer or body of the second material), for the case of the exemplary handle shown in Figure 1. This layer is formed by injection over the first material of the inner layer.

As can be seen, this layer is split into two separate areas A and B. Area B includes projections or tabs (33) in its inner portion below the surface as the result of filling up the hollow channels (23) of the inner body in the injection process for injecting this second material. It can also be seen that the inner portion of the elements of the signs (for example, the inner areas of the letters or logo indicating the type of tool) is also filled up (311 and 312, respectively) as this second material penetrated the hollow channels (221-222) of the inner body.

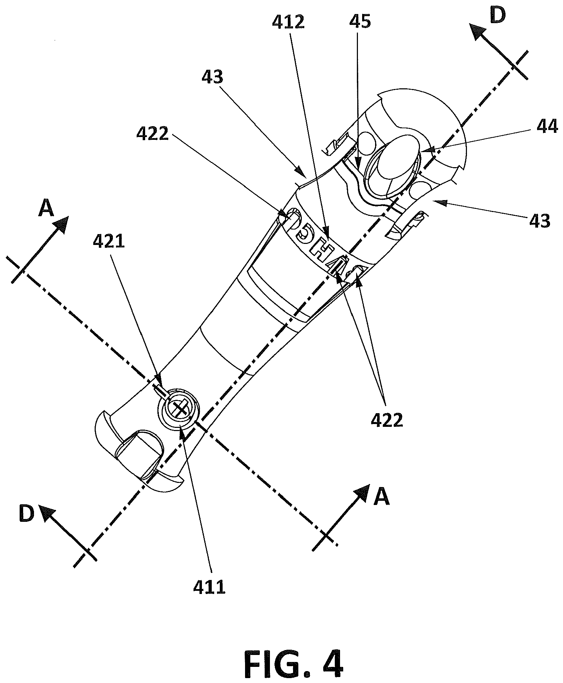

The manufacturing process for manufacturing the handle comprises a first molding phase for shaping the inner body (i.e., the layer of the first material shown in Figure 2) for which a first mold is used. Figure 4 shows a top view (one of its halves) of the mold (first mold) used for depositing (settling) the first material for the case of the exemplary handle shown in Figure 1, according to an embodiment of the present invention.

This first mold has a series of recesses (411-412) for forming the signs (211-212) (letters, logos or any other type of symbol), another recess (44) for forming the rim (24) around the hole, and another recess (45) for forming the rim (25) separating both areas. Therefore, when the first material is injected into the inner body, the first material flows through these recesses, making the embossments of the signs (211-212), the rim (24) around the hole and the rim (25) for separating both areas appear, as seen in Figure 2. Logically, this mold also has a suitable shape for making the rest of the embossments (26, 27) and so that the resulting part has the desired shape.

The mold has a series of cores (421-422) for forming the channels (221-222) for filling up the elements of the signs. In other words, as explained above, each element (letter, number, drawing, logo...) that is not completely open and therefore has a closed cavity inside (in the case of the example, the B, the A, the O and the bottom logo) has one or several hollow channels or tunnels (221-222) which allows filling up the inner areas of said elements.

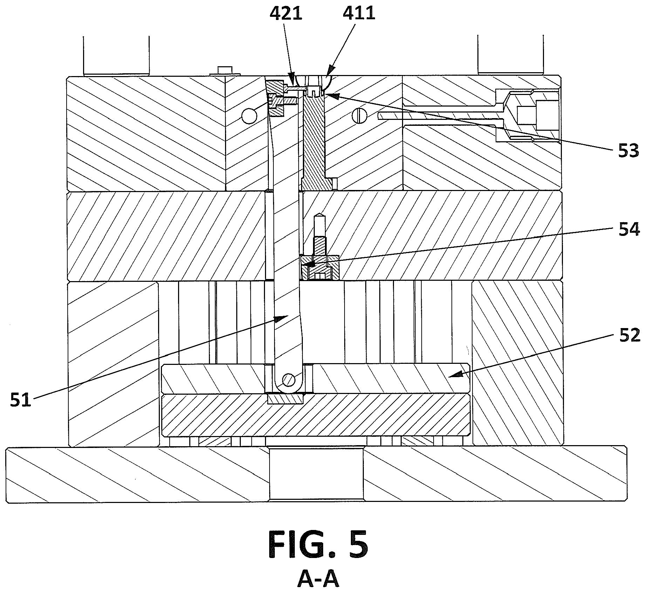

Figure 5 shows cross-section view (along line A-A) of the mold, where some of these cores can be seen, specifically the core used for filling up the inside of the symbol (logo) located at one end of the handle and which in this example indicates the shape of the screwdriver tip. This drawing shows the recess (411) used for forming said symbol. There is also a series of small cores (53) that help give the final shape to the sign (these small cores correspond to the inner areas of the sign).

The core (421) which allows shaping the hollow channel or tunnel (221) used for filling up (in the second molding) the inside of the logo (211) located at one end of the handle can also be seen. For de molding the tunnel, there is an ejector (51) which, as the result of a wedge (54), moves the core (421) horizontally when an ejection plate (52) moves vertically upward, taking it out of the piece and therefore allowing de molding of the tunnel. In other words, the geometry of the ejector (51) is such that at a specific point of its vertical travel, it makes the core (421) move horizontally since it runs into a wedge.

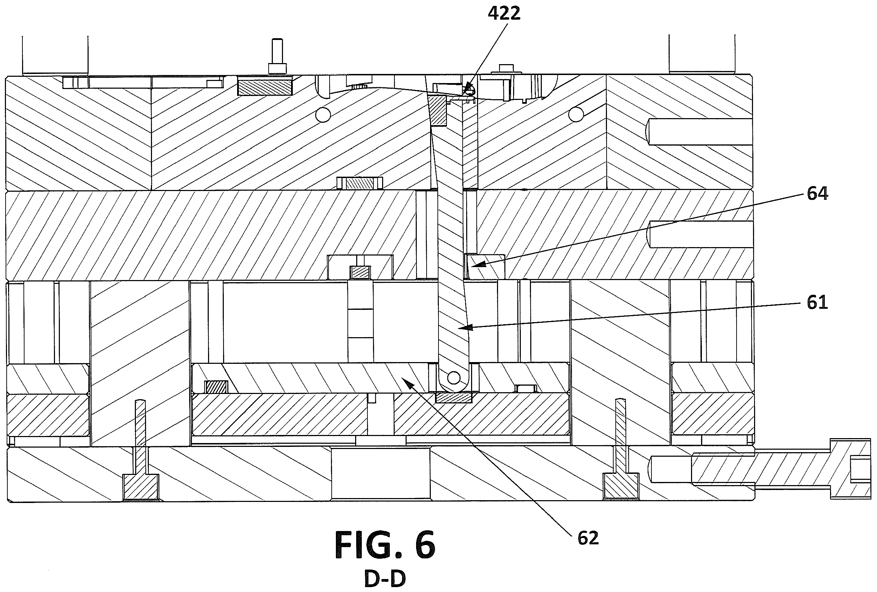

This structure is repeated for filling up the rest of the signs in the handle. Figure 6 shows a cross-section view (along line D-D) of the mold where other such cores, specifically those used for filling up the letters of the manufacturer's name, can be seen. This drawing shows one of the cores (422) which allows shaping the hollow channel or tunnel (222) used for filling up (in the second molding) the inside of one of the letters. The drawing only shows one of the cores, but there are generally as many cores as channels to be formed. Like in the previous case, for demolding the tunnel there is an ejector (61) which, as a result of a wedge (64), moves the core (422) horizontally when an ejection plate (62) moves vertically upward, taking it out of the part and therefore allowing demolding of the tunnel (222). In other words, like before, the geometry of the ejector (61) is such that at a specific point of its vertical travel, it makes the core (422) move horizontally since it runs into a wedge.

There are also cores (43) for shaping hollow channels or tunnels (23) (two in this example) joining areas A and B thereunder, which allows covering area B from area A with the second material.

Once the inner body is shaped with suitable tunnels and embossments, said inner body goes to a second molding phase (in a second mold) for injecting the second material over the first (injection overmolding). This injection process will be performed in a conventional manner (for which purpose it is not necessary to describe in detail herein or show the mold used), with the particularity that said mold has a single injection point and, as a result of the created tunnels which allow the second material to flow therethrough, also fills up the inside of the elements (letters, numbers or drawings) in the handle, as well as area B from area A (in an alternative embodiment, the only injection point can be in area B, and the operation will be similar with the exception that area A would be filled up from area B). Furthermore, said second mold has the suitable shape (with suitable embossments) for generating a series of grooves or channels (6) in the central portion of the layer of this second material to improve the grip provided by the handle.

In one embodiment, the rim (25) separating areas A and B has a smaller height than the desired thickness of the layer of rubber (or in other words, the rim 25 has a smaller height than the rest of the embossments because such embossments determine the thickness of the layer of rubber). As can be seen in Figure 1, this means that the strip (15) of first material separating both areas A and B of the second material is at a lower level than the second material, forming a type of separation pit. In this case, to prevent the second material from going from area B to area A above the rim (25) in the second molding process, said second mold must further have a projection (with the shape of the rim 25) that is tightly attached to said rim such that it prevents the passage of the second material from area B to area A.

In an alternative embodiment, the rim (25) separating areas A and B has the same height as the desired thickness of the layer of second material (rubber), or in other words the thickness of the layer of rubber will be adjusted so that it is flush with the rim (25). This means that the strip of first material separating the both areas A and B of the second material is at the same level as the second material. In this case, since the thickness of rubber is flush with the rim (25), the rubber does not go from area B to area A, so the second mold does not have to include the projection with the shape of the rim 25 referred to in the preceding paragraph. In this second embodiment, the height of this rim (25) could be the same as the rest of the embossments or rims of the layer of first material (21, 24, 26, 27), such that the layer of rubber deposited on the first material has a uniform height on the entire surface.

Although an arrangement with two signs (the manufacturer's name, brand, at the top and a logo at the bottom) has been chosen in the present example, it is only by way of example and does not seek to limit the application, so the handle according to the present invention could incorporate another type and number of signs arranged in any position on the handle.

At this point it should be indicated that although reference is often made to a handle for a tool (specifically, a screwdriver) in this description, this reference is only by way of example and does not seek to limit the application, so the handle herein described can be applied to other types of objects, and specifically to any other type of tools.

The present description also makes frequent reference to certain types of first material (polypropylene) and second material (rubber); these references are only by way of example and do not seek to limit the application, so the handle herein described can be manufactured using other types of first and second material.

In this text, the word "comprises" and variants thereof (such as "comprising", etc.) must not be interpreted in an excluding manner, i.e., they do not exclude the possibility that what is described may include other elements, steps, etc. Furthermore, in the claims the expression "comprises/comprising" does not exclude other elements or steps, and the indefinite article "a" does not exclude a plurality. No reference number in the claims must be interpreted as being limiting of the scope.

The aspects defined in this detailed description are provided to help thoroughly understand the invention. Therefore, persons skilled in the art will recognize that variations, changes and modifications can be made to the embodiments described herein without departing from the scope of the invention. The description of well-known functions and elements are also omitted for the sake of clarity and conciseness.

Having sufficiently described the nature of the invention as well as the manner of putting it into practice, it is possible that the different parts of the invention can be manufactured using a variety of materials in a number of sizes and shapes, and those variations suggested by practice could also be introduced in the constitution or method thereof provided that they do not alter the fundamental principle of the present invention.

## Claims

1. Method for manufacturing a handle formed by at least a first material and a second material, **characterized in that** the method comprises the following steps:
a) injection molding an inner body (1) by injecting the first material using a first mold, where said inner body (1) comprises:
a rim (25) circumferentially surrounding said inner body, separating a first area (A) from a second area (B);
at least one hollow channel (23) communicating the first area (A) and the second area (B), said hollow channel extending under the surface of the inner body below the rim (25);
a set of embossed elements (211, 212) located on the surface of the inner body, where for each closed area of an element belonging to this set of elements, the inner body (1) comprises a hollow channel (221, 222) extending under the surface of the inner body below the embossment of the element and communicating the portion of the inner body (1) outside the element and the closed area of the element;
b) injection molding an outer body (2) by injecting the second material over the inner body (1) through a single injection point (3) using a second mold, such that this outer body made of the second material is flush with the embossments of the embossed elements, and where:
molding is performed by making the second material flow through the hollow channel (23) from the first area (A) to the second area (B), such that the outer surface of the outer body (2) has two separate areas that do not touch one another, located on both sides of the rim (25), and by making the second material flow through the hollow channel (221, 222) of each closed area of the set of elements, such that the closed areas are filled up with the second material such that said material is flush with the embossment of the element to which the closed area belongs;
where the elements of the set of embossed elements are letters, numbers or drawings providing a user of the handle with information about the tool to which the handle belongs.

2. Method according to any of the preceding claims, where the handle is a handle for a hand tool.

3. Method according to any of the preceding claims, where the first material is a hard material and the second material is a softer and more flexible material than the first material.

4. Method according to any of the preceding claims, where the first material is polypropylene and the second material is rubber.

5. Method according to any of the preceding claims, where the inner body has two embossments (26, 27) at the ends of the handle and the outer surface of the outer body is flush with these embossments (26, 27) of the ends.

6. Method according to any of the preceding claims, where the height of the rim (25) is less than the thickness of the outer body, and where the second mold has a projection which has the same shape as the rim (25) and is tightly attached to said rim, such that it prevents the passage of the second material from the second area (B) to the first area (A) when the second material is injected.

7. Method according to any of the preceding claims, where the inner body has a through hole (14) with an embossment (24) around said hole, and where the outer body made of the second material is flush with said embossment around the hole when the second material is molded.

8. Method according to any of the preceding claims, where the outer body has a series of grooves (6) on the surface to improve the grip provided by the handle.

9. System for manufacturing a handle formed by at least a first material and a second material, **characterized in that** the system comprises:
- a first mold for injection molding an inner body (1) by injecting the first material, where said inner body (1) comprises:
a rim (25) circumferentially surrounding said inner body, separating a first area (A) and a second area (B);
at least one hollow channel (23) communicating the first area (A) and the second area (B), said hollow channel extending under the surface of the inner body below the rim (25);
a set of embossed elements (211, 212) located on the surface of the inner body, where for each closed area of an element belonging to this set of elements, the inner body (1) comprises a hollow channel (221, 222) extending under the surface of the inner body below the embossment of the element and communicating the portion of the inner body outside the element and the closed area of the element;
- a second mold for injection molding an outer body (2) by injecting the second material over the inner body (1) through a single injection point (3), said outer body (2) being flush with the embossments of the elements of the inner body, and where the outer surface of the outer body (2) has two areas that do not externally touch one another located on both sides of the rim (25) made of the first material, and the closed areas of the embossed elements are filled up with the second material such that said material is flush with the embossment of the element to which the closed area belongs;
where the elements of the set of embossed elements are letters, numbers or drawings providing a user of the handle with information about the tool to which the handle belongs.

10. Mold for manufacturing the inner body of a handle by injecting a first material over said mold, where the mold comprises:
- a first recess (45) for forming in the inner body a rim (25) circumferentially surrounding said inner body, separating a first area (A) and a second area (B)
- at least a first core (43) for shaping a hollow channel communicating the first area (A) and the second area (B) under the surface of the inner body, below the rim (25),
- a set of recesses (411, 412) for forming a set of embossed elements (211, 212) on the surface of the inner body,
- for each closed area of an element belonging to the set of elements, a second core (421, 422) for shaping a hollow channel communicating the portion of the inner body outside the element and the closed area of the element, below the embossment of the element (211, 212);
where the elements of the set of embossed elements are letters, numbers or drawings providing a user of the handle with information about the tool to which the handle belongs.

11. Mold according to claim 10, further comprising:
- for each second core (421, 422), an ejection part (51, 61) moving the core (421, 422) horizontally when a plate (52, 62) moves vertically upward, taking the core out and therefore allowing de-molding of the corresponding hollow channel.

## Patentansprüche

1. Verfahren zur Herstellung eines Griffs, welcher von mindestens einem ersten Material und einem zweiten Material gebildet ist, **dadurch gekennzeichnet, dass** das Verfahren die folgenden Schritte umfasst:
a) Spritzgießen eines Innenkörpers (1) durch Spritzen des ersten Materials unter Verwendung einer ersten Form, wobei der Innenkörper (1) umfasst:
einen Rand (25), welcher den Innenkörper in Umfangsrichtung umgibt, so dass ein erster Bereich (A) von einem zweiten Bereich (B) getrennt ist;
mindestens einen Hohlkanal (23), welcher den ersten Bereich (A) und den zweiten Bereich (B) verbindet, wobei der Hohlkanal sich unter der Oberfläche des Innenkörpers unterhalb des Randes (25) erstreckt;
einen Satz von Prägeelementen (211, 212), welche sich auf der Oberfläche des Innenkörpers befinden, wobei der Innenkörper (1) für jeden geschlossenen Bereich eines zu diesem Satz von Elementen gehörenden Elements einen Hohlkanal (221, 222) umfasst, welcher sich unter der Oberfläche des Innenkörpers unterhalb der Prägung des Elements erstreckt und den Teilbereich des Innenkörpers (1) außerhalb des Elements und den geschlossenen Bereich des Elements verbindet;
b) Spritzgießen eines Außenkörpers (2) durch Spritzen des zweiten Materials über den Innenkörper (1) durch einen einzigen Einspritzpunkt (3) hindurch unter Verwendung einer zweiten Form derart, dass dieser Außenkörper, hergestellt aus dem zweiten Material, bündig mit den Prägungen der Prägeelemente ist, und wobei:
das Formen durchgeführt wird durch Fließenlassen des zweiten Materials durch den Hohlkanal (23) hindurch von dem ersten Bereich (A) zu dem zweiten Bereich (B) derart, dass die äußere Oberfläche des Außenkörpers (2) zwei getrennte, einander nicht berührende Bereiche aufweist, welche beiderseits des Randes (25) liegen, und durch Fließenlassen des zweiten Materials durch den Hohlkanal (221, 222) jedes geschlossenen Bereichs des Satzes von Elementen hindurch derart, dass die geschlossenen Bereiche mit dem zweiten Material derart aufgefüllt werden, dass das Material bündig mit der Prägung des Elements ist, zu dem der geschlossene Bereich gehört;
wobei die Elemente des Satzes von Prägeelementen Buchstaben, Zahlen oder Zeichnungen sind, welche einem Benutzer des Griffs Informationen über das Werkzeug liefern, zu dem der Griff gehört.

2. Verfahren nach einem der voranstehenden Ansprüche, wobei der Griff ein Griff für ein Handwerkzeug ist.

3. Verfahren nach einem der voranstehenden Ansprüche, wobei das erste Material ein hartes Material und das zweite Material eine weicheres und flexibleres Material als das erste Material ist.

4. Verfahren nach einem der voranstehenden Ansprüche, wobei das erste Material Polypropylen und das zweite Material Gummi ist.

5. Verfahren nach einem der voranstehenden Ansprüche, wobei der Innenkörper zwei Prägungen (26, 27) an den Enden des Griffs aufweist und die äußere Oberfläche des Außenkörpers mit diesen Prägungen (26, 27) der Enden bündig ist.

6. Verfahren nach einem der voranstehenden Ansprüche, wobei die Höhe des Randes (25) kleiner ist als die Dicke des Außenkörpers und wobei die zweite Form einen Vorsprung aufweist, welcher die gleiche Gestalt wie der Rand (25) aufweist und dicht an den Rand anschließt derart, dass er beim Spritzen des zweiten Materials den Durchtritt des zweiten Materials von dem zweiten Bereich (B) zu dem ersten Bereich (A) verhindert.

7. Verfahren nach einem der voranstehenden Ansprüche, wobei der Innenkörper ein Durchgangsloch (14) mit einer Prägung (24) um das Loch herum aufweist und wobei der von dem zweiten Material gebildete Außenkörper mit der Prägung um das Loch herum bündig ist, wenn das zweite Material geformt ist.

8. Verfahren nach einem der voranstehenden Ansprüche, wobei der Außenkörper eine Reihe von Nuten (6) an der Oberfläche aufweist, um die von dem Griff bereitgestellte Griffigkeit zu verbessern.

9. System zur Herstellung eines Griffs, welcher von mindestens einem ersten Material und einem zweiten Material gebildet ist, **dadurch gekennzeichnet, dass** das System umfasst:
- eine erste Form zum Spritzgießen eines Innenkörpers (1) durch Spritzen des ersten Materials, wobei der Innenkörper (1) umfasst:
einen Rand (25), welcher den Innenkörper in Umfangsrichtung umgibt und einen ersten Bereich (A) und einen zweiten Bereich (B) trennt;
mindestens einen Hohlkanal (23), welcher den ersten Bereich (A) und den zweiten Bereich (B) verbindet, wobei sich der Hohlkanal unter der Oberfläche des Innenkörpers unterhalb des Randes (25) erstreckt;
einen Satz von Prägeelementen (211, 212), welche sich auf der Oberfläche des Innenkörpers befinden, wobei der Innenkörper (1) für jeden geschlossenen Bereich eines zu diesem Satz von Elementen gehörenden Elements einen Hohlkanal (221, 222) umfasst, welcher sich unter der Oberfläche des Innenkörpers unterhalb der Prägung des Elements erstreckt und den Teilbereich des Innenkörpers außerhalb des Elements und den geschlossenen Bereich des Elements verbindet;
- eine zweite Form zum Spritzgießen eines Außenkörpers (2) durch Spritzen des zweiten Materials über den Innenkörper (1) durch einen einzigen Einspritzpunkt (3) hindurch, wobei der Außenkörper (2) mit den Prägungen der Elemente des Innenkörpers bündig ist und wobei die äußere Oberfläche des Außenkörpers (2) zwei Bereiche aufweist, welche sich nicht von außen berühren und beiderseits des von dem ersten Material gebildeten Randes (25) liegen, und wobei die geschlossenen Bereiche der Prägeelemente mit dem zweiten Material aufgefüllt werden derart, dass das Material bündig mit der Prägung des Elements ist, zu dem der geschlossene Bereich gehört;
wobei die Elemente des Satzes von Prägeelementen Buchstaben, Zahlen oder Zeichnungen sind, welche einem Benutzer des Griffs Informationen über das Werkzeug liefern, zu dem der Griff gehört.

10. Form zur Herstellung des Innenkörpers eines Griffs durch Spritzen eines ersten Materials über die Form, wobei die Form umfasst:
- eine erste Ausnehmung (45) zum Bilden eines Randes (25), welcher den Innenkörper in Umfangsrichtung umgibt, so dass ein erster Bereich (A) und ein zweiter Bereich (B) getrennt werden,
- mindestens einen ersten Kern (43) zur Formgebung eines Hohlkanals, welcher den ersten Bereich (A) und den zweiten Bereich (B) unter der Oberfläche des Innenkörpers unterhalb des Randes (25) verbindet,
- einen Satz von Ausnehmungen (411, 412) zum Bilden eines Satzes von Prägeelementen (211, 212) auf der Oberfläche des Innenkörpers,
- für jeden geschlossenen Bereich eines Elements, welches zu dem Satz von Elementen gehört, einen zweiten Kern (421, 422) zur Formgebung eines Hohlkanals, welcher den Teilbereich des Innenkörpers außerhalb des Elements und den geschlossenen Bereich des Elements unterhalb der Prägung des Elements (211, 212) verbindet;
wobei die Elemente des Satzes von Prägeelementen Buchstaben, Zahlen oder Zeichnungen sind, welche einem Benutzer des Griffs Informationen über das Werkzeug liefern, zu dem der Griff gehört.

11. Form nach Anspruch 10, ferner umfassend:
- für jeden zweiten Kern (421, 422) ein Auswurfteil (51, 61), welches den Kern (421, 422) horizontal bewegt, wenn sich eine Platte (52, 62) vertikal nach oben bewegt, so dass der Kern entfernt und somit ein Entformen des korrespondierenden Hohlkanals ermöglicht wird.

## Revendications

1. Procédé de fabrication d'une poignée formée à partir d'au moins un premier matériau et d'un second matériau, **caractérisé en ce que** le procédé comprend les étapes suivantes :
a) moulage par injection d'un corps interne (1) en injectant le premier matériau en utilisant un premier moule, où ledit corps interne comprend :
un bord (25) entourant le corps de façon circonférentielle, séparant une première zone (A) d'une seconde zone (B)
au moins un canal creux (23) faisant communiquer la première zone (A) aec la seconde zone (B), ledit canal creux s'étendant sous la surface du corps interne, au-dessous du bord (25),
b) moulage par injection d'un corps externe (2) en utilisant un second moule de sorte que ce corps externe réalisé dans le second matériau affleure les gaufrages des éléments de gaufrage, et :
le moulage et exécuté en faisant couler le second matériau à travers le canal creux (23) depuis la première zone (A) à la seconde zone (B) de sorte que la surface externe du corps externe (2) présente deux zones séparées qui ne se touchent pas l'une l'autre, situées de part et d'autre du bord (25) et en faisant couler le second matériau à travers le canal creux (221, 222) de chaque zone fermée de l'ensemble d'éléments de sorte que les zones fermées sont remplie du second matériau de manière que ledit matériau affleure le gaufrage de l'élément auquel la zone fermée appartient,
les éléments de l'ensemble d'éléments de gaufrage étant des lettres, des chiffres ou des dessins fournissant à un utilisateur de la poignée des informations relatives à l'outil auquel la poignée appartient.

2. Procédé suivant une des revendications précédentes, dans lequel la poignée est une poignée pour un outil à main.

3. Procédé suivant une des revendications précédentes, dans lequel le premier matériau est un matériau dur et le second matériau est un matériau plus flexible et plus mou que le premier matériau.

4. Procédé suivant une des revendications précédentes, dans lequel le premier matériau est du polypropylène et le second matériau est du caoutchouc.

5. Procédé suivant une des revendications précédentes, dans lequel le corps interne présente deux gaufrages (26, 27) aux extrémités de la poignée et la surface externe du corps externe affleure ces gaufrages (26, 27) des extrémités.

6. Procédé suivant une des revendications précédentes, dans lequel la hauteur du bord (25) est inférieure à l'épaisseur du corps externe, et dans lequel le second moule possède une saillie qui présente la même forme que le bord (25) et est fermement fixée audit bord de sorte qu'elle empêche le passage du second matériau depuis la seconde zone (B) à la première zone (A) lorsque le second matériau est injecté.

7. Procédé suivant une des revendications précédentes, dans lequel le corps interne possède un trou traversant (14) avec un gaufrage (24) autour dudit trou et dans lequel le corps externe réalisé dans le second matériau affleure ledit gaufrage autour du trou lorsque le second matériau est moulé.

8. Procédé suivant une des revendications précédentes, dans lequel le corps externe possède sur sa surface une série de rainures (6) pour améliorer la prise fournie par la poignée.

9. Procédé de fabrication d'une poignée formée par au moins un premier matériau et un second matériau, **caractérisé en ce que** le système comprend :
- un premier moule pour moulage par injection d'un corps interne (1) en injectant le premier matériau, ledit corps interne (1) comprenant :
un bord (25) entourant de manière circonférentielle ledit corps interne en séparant une première zone (A) d'une seconde zone (B),
au moins un canal creux (23) faisant communiquer la première zone (A) et la seconde zone (B), ledit canal creux s'étendant sous la surface du corps interne au-dessous du bord (25),
un ensemble d'éléments à gaufrage (211, 212) situés sur la surface du corps interne, chaque zone fermée d'un élément appartenant à cet ensemble d'éléments, le corps interne (1) comprend un canal creux (221, 222) s'étendant sous la surface du corps interne , au-dessous du gaufrage de l'élément et faisant communiquer la partie du corps interne à l'extérieur de l'élément et la zone fermée de l'élément,
- un second moule pour moulage par injection moulant un corps externe (2) en injectant le second matériau par-dessus le corps interne (1) à travers un unique point d'injection (3) le corps externe /extérieur (2) affleurant les gaufrages des éléments du corps interne, et la surface externe du corps externe (2) possède deux zones qui ne se touchent pas extérieurement l'une l'autre situées de part et d'autre du bord (25) réalisé dans le premier matériau, et les zones fermées des éléments à gaufrage étant remplies du second matériau de sorte que ledit matériau affleure les gaufrages de l'élément auquel la zone fermée appartient,
les éléments de l'ensemble d'éléments à gaufrage étant des lettres, nombres ou dessins fournissant à un utilisateur de la poignée des informations relatives à l'outil auquel la poignée appartient.

10. Moule destiné à la fabrication du corps interne d'une poignée par injection d'un premier matériau par-dessus ledit moule, le moule comprenant :
- un premier évidement (45) destiné à former dans le corps interne un bord (25) entourant ledit corps interne de façon circonférentielle, séparant l'une de l'autre, une première zone (A) et une seconde zone (B),
- au moins un premier noyau (43) destiné à former un canal creux faisant communiquer l'une avec l'autre, la première zone (A) et la seconde zone (B) sous la surface du corps interne, au-dessous du bord (25),
- un ensemble d'évidements (411, 412) destiné à former un ensemble d'éléments de gaufrage (211, 212) sur la surface du corps interne,
- pour chaque zone fermée d'un élément appartenant à l'ensemble d'éléments, un second noyau (421, 422) destiné à former un canal creux faisant communiquer la partie du corps interne à l'extérieur de l'élément et la zone fermée de l'élément, au-dessous du gaufrage de l'élément (211, 212),
les éléments de l'ensemble des éléments de gaufrage étant des lettres, chiffres ou des dessins fournissant à l'utilisateur de la poignée des informations relatives à l'outil, auquel la poignée appartient.

11. Moule suivant la revendication 10, le moule comprenant en plus :
- pour chaque second noyau (421, 422), une partie d'éjection (51, 61) éjectant le noyau (421, 422) horizontalement lorsqu'une plaque (52, 62) se déplace verticalement vers le haut, sortant le noyau et par conséquence permettant le démoulage du canal creux correspondant.
